# DEMANDE DE BREVET EUROPEEN

(11) **EP 0 911 683 A1**
(43) Date de publication de la demande: **28.04.1999**
(21) Numéro de dépôt: 98402611.2
(22) Date de dépôt: 20.10.1998
(51) Int. Cl.: G02F 1/35, H01S 3/108

(54) **Générateur d'ondes hyperfréquences**

(30) Priorité: 20.10.1997 FR 9713098
(71) Demandeur: THOMSON-CSF, 75008 Paris (FR)
(72) Inventeur: Berger, Vincent, Thomson-CSF P.I.dept.Prot.Conseil, 94117 Arcueil cedex (FR)

(57) **Abrégé**

Le générateur d'ondes hyperfréquences comporte un milieu en matériau optique non linéaire (1) compris dans une cavité optique (2, 3) et une source optique (4) émettant dans le milieu non linéaire un faisceau de pompe comportant plusieurs fréquences de façon à présenter une gamme de fréquences large permettant d'obtenir par différences de fréquences une onde hyperfréquence. La cavité optique est accordée à ladite longueur d'onde hyperfréquence, l'un des miroirs de la cavité étant semi-réfléchissant.

Différents modes de réalisation sont fournis notamment, on prévoit pour la cavité hyperfréquence des miroirs en matériau supraconducteur.

## Description

L'invention concerne un générateur d'ondes hyperfréquences.

L'invention prévoit de générer des ondes hyperfréquences à l'aide de la différence de fréquence d'ondes optiques.

Selon l'invention, un générateur d'ondes hyperfréquences comporte un milieu en matériau optique non linéaire compris dans une cavité optique et une source optique émettant dans le milieu non linéaire une impulsion de présentant plusieurs fréquences de façon à obtenir par différences de fréquences une onde hyperfréquence ; et en ce que la cavité optique est accordée à ladite longueur d'onde hyperfréquence, l'un des miroirs de la cavité étant semi-réfléchissant ou quasi-réfléchissant à la longueur d'onde hyperfréquence.

Les différents objets et caractéristiques de l'invention apparaîtront plus clairement dans la description qui va suivre et dans les figures annexées qui représentent :
- la figure 1, un exemple de réalisation de base du système de l'invention ;
- la figure 2, un exemple de réalisation compacte de l'invention ;
- les figures 3a, 3b et 4, des courbes illustrant le fonctionnement du dispositif de l'invention ;
- la figure 5, une variante de réalisation du dispositif de l'invention ;
- la figure 6, une variante de réalisation de l'invention dans laquelle la cavité optique est réalisée à l'aide d'un matériau à gap de photons ;
- la figure 7, une variante de réalisation de l'invention dans laquelle le faisceau pompe est perpendiculaire à l'axe de la cavité ;
- les figures 8 à 10, des variantes de réalisation de l'invention.

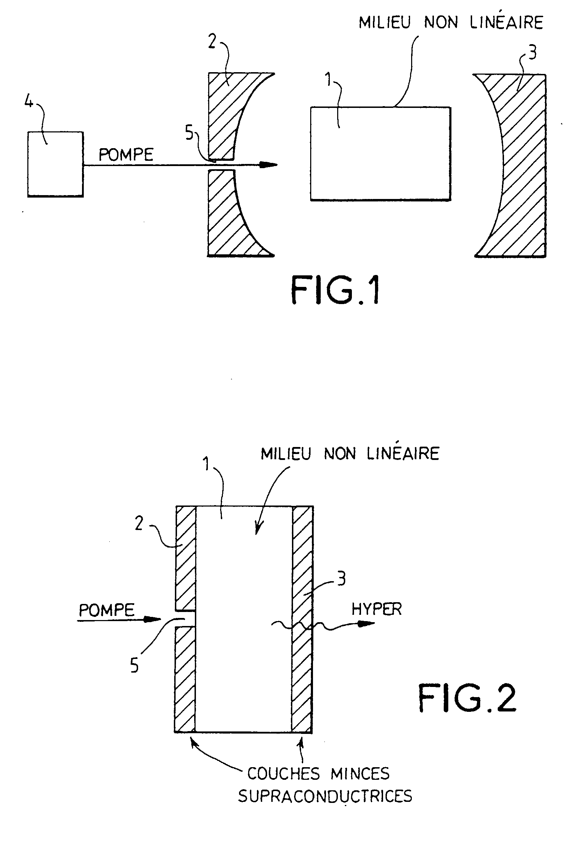

En se reportant à la figure 1, on va donc décrire un exemple de réalisation du système de l'invention.

Ce système comporte un milieu 1 en matériau optique non linéaire inséré dans une cavité optique constituée de deux miroirs 2 et 3. Une source 4 émet un faisceau lumineux de pompe qui pénètre dans le milieu non linéaire 1. L'impulsion optique est très courte de façon à ce qu'elle présente une bande spectrale très grande. Les différentes composantes (ou valeurs de fréquences) de cette bande spectrale interfèrent dans le milieu 1 ce qui donne lieu à des fréquences ayant pour valeurs des différences de fréquences. La cavité (distance entre miroirs 2 et 3) est accordée pour amplifier une fréquence ayant pour valeur une différence de fréquences déterminée. La bande spectrale du faisceau de pompe étant large, on peut obtenir des différences de fortes valeurs et donc de courtes longueurs d'ondes. De plus, une valeur de différence de fréquences déterminée peut être obtenue avec un grand nombre de couple de fréquences. Le miroir 2 est réfléchissant à la longueur d'onde hyperfréquence à obtenir. Le miroir 3 est quasi-réfléchissant ou semi-réfléchissant à cette longueur d'onde.

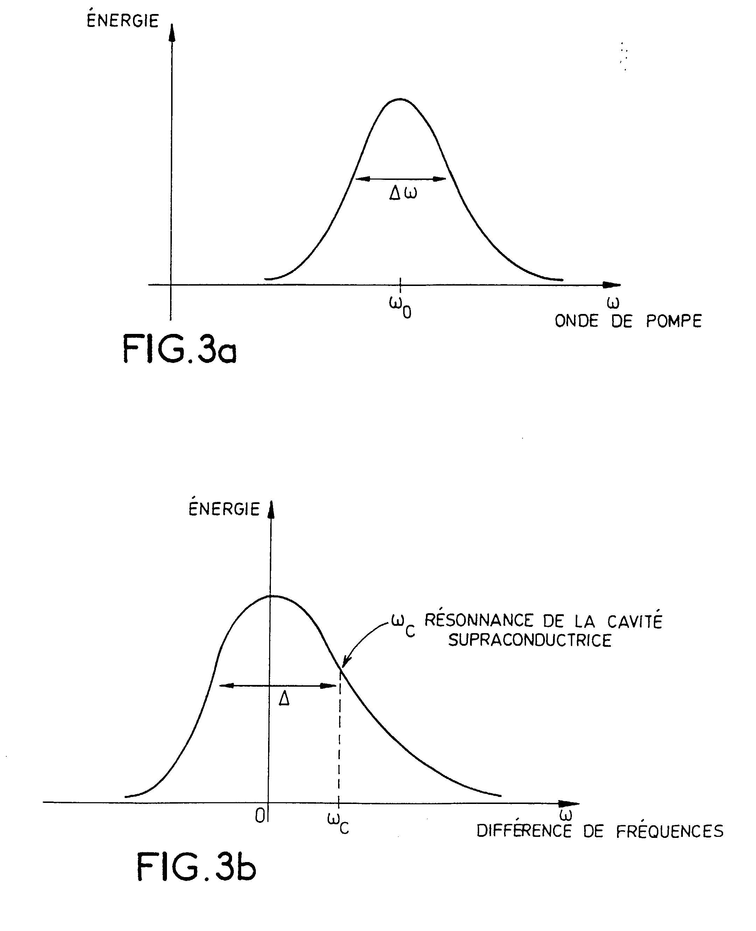

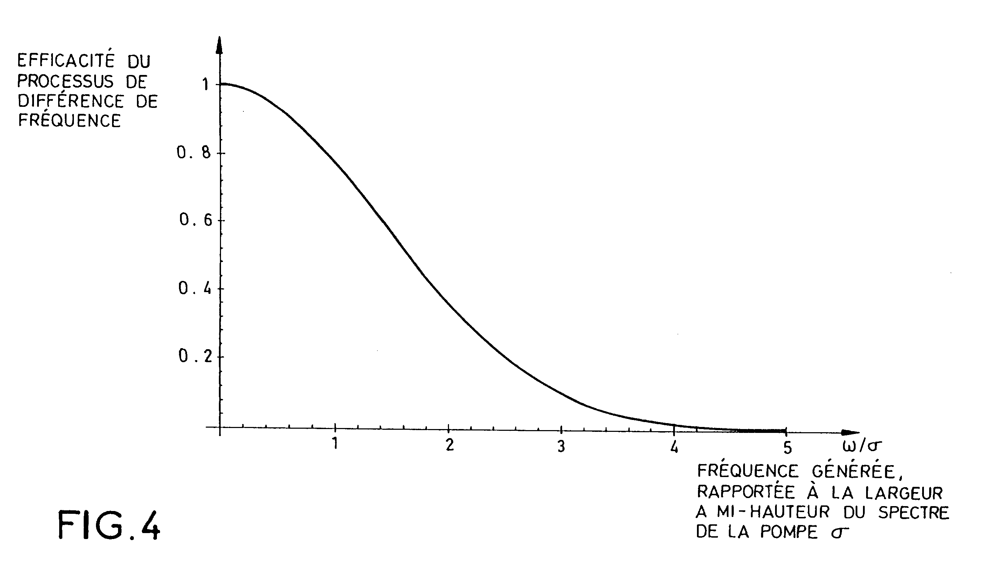

Le principe de fonctionnement de l'invention est donc la réalisation de différences de fréquences à l'intérieur de la cavité. Comme le spectre de la pompe est large, il contient naturellement les fréquences qui vont donner lieu à l'émission hyperfréquence par différence de fréquence. Contrairement à un procédé habituel de différence de fréquence où l'on dispose de deux faisceaux différents à l'entrée de fréquences w1 et w2, et d'un faisceau généré à la fréquence w3 = w2 - w1, c'est la largeur spectrale du faisceau de pompe (conséquence intrinsèque de sa faible durée) qui fournit les deux sources en une seule (figure 3). Comme on ne dispose que d'un seul faisceau de source, ce processeur peut être également présenté comme de la rectification optique élargie en fréquence, de la fréquence nulle vers les hyperfréquences. La nature pulsée de la pompe est également très favorable en terme de rendement, comme cela est toujours le cas dans les processus non linéaires d'ordre deux, dont l'efficacité dépend du carré de la puissance optique incidente. Plus on cherche à obtenir une fréquence générée élevée, plus il sera nécessaire de prendre un faisceau de pompe court temporellement. Ce point est illustré en figure 4.

Selon la figure 1, les miroirs 2 et 3 ne sont pas solidaires de la cavité. Le faisceau pompe pénètre dans la cavité par un trou 5 prévu dans un miroir. Le diamètre de ce trou est suffisant pour permettre le passage du faisceau (quelques micromètres) mais petit vis-à-vis de la longueur d'onde hyperfréquence à créer de façon à ne pas générer de pertes trop importantes pour les hyperfréquences qui vont résonner à l'intérieur de la cavité.

De façon préférentielle, la cavité optique est réalisée à l'aide de deux miroirs hyperfréquences supraconducteurs. Elle contient un matériau non linéaire qui a un fort coefficient non linéaire d'ordre 2, comme par exemple le GaAS ou le LiNbO₃. Les miroirs de la cavité peuvent être soit des supraconducteurs massifs, plans ou concaves (figure 1), mais peuvent également être des couches minces de supraconducteur déposées sur le matériau non linéaire lui-même. Dans ce dernier cas, la cavité est monolithique (figure 2).

On peut éventuellement réaliser un petit trou dans l'un des deux miroirs supraconducteurs qui permet de faire rentrer à l'intérieur de la cavité un faisceau optique pulsé.

La pompe peut être un laser à modes bloqués, comme par exemple un laser YAG dopé néodyme, un laser saphir dopé titane avec absorbant saturable, ou un laser à semiconducteurs pulsé. Toute source convient si elle émet plusieurs fréquences notamment si elle est courte temporellement. En effet, dans ce cas les relations d'incertitude impliquent qu'elle a un spectre assez large, et cet aspect est essentiel dans le processus de génération d'hyperfréquence. La source peut également être une source multimode longitudinale. Les différentes fréquences correspondent alors aux différents modes longitudinaux.

La réalisation d'une cavité supraconductrice peut être importante. Les coefficients de réflexion très élevés et la faiblesse des pertes des miroirs hyperfréquences permet de réaliser des cavités résonnantes avec des finesses très élevées, allant de quelques milliers jusqu'à 10⁹. A l'intérieur de la cavité, le champ hyperfréquence généré dans le matériau non linéaire va être énormément amplifié si il est résonnant avec la cavité. Le gain dans le processus de différence de fréquence sera proportionnel à la finesse de la cavité. La grande efficacité du processus de différence de fréquence exacerbé pour la fréquence résonnante de la cavité supraconductrice permet de générer une onde hyperfréquence extrêmement fine spectralement, dont la fréquence peut être variée en déplaçant la résonance de la cavité (ceci peut être obtenu en déplaçant l'un des miroirs, par exemple). Outre les avantages du rendement et de la finesse spectrale de la source hyperfréquence obtenue, la cohérence spatiale extrêmement élevée de l'onde à la sortie de la cavité permet d'obtenir une très forte directionnalité du faisceau hyperfréquence.

Il peut être important de pouvoir accorder la résonance de la cavité. Dans le cas d'un faisceau pulsé, cela permet d'accorder la fréquence de l'onde hyperfréquence générée avec la période entre deux pulses de pompe, afin d'obtenir une efficacité maximale dans le processus non linéaire. Dans le cas de deux faisceaux de pompe différents de fréquence w1 et w2, l'accordabilité de la cavité permet de se placer à la résonance w3 = w2-w1, là encore pour une efficacité maximale de la résonance. L'accordabilité de la résonance de la cavité peut être obtenue en déplaçant l'un des miroirs, par exemple, ou en utilisant la piézoélectricité ou l'effet électrooptique sur le matériau non linéaire. Le chemin optique à l'intérieur de la cavité est alors modifié simplement en appliquant un champ électrique sur le matériau, et la cavité est donc accordée avec ce paramètre.

Afin d'augmenter l'efficacité du processus de différence de fréquence, il peut être intéressant de réaliser un multipassage de la pompe à travers le cristal non linéaire, à l'aide de miroirs de renvoi.

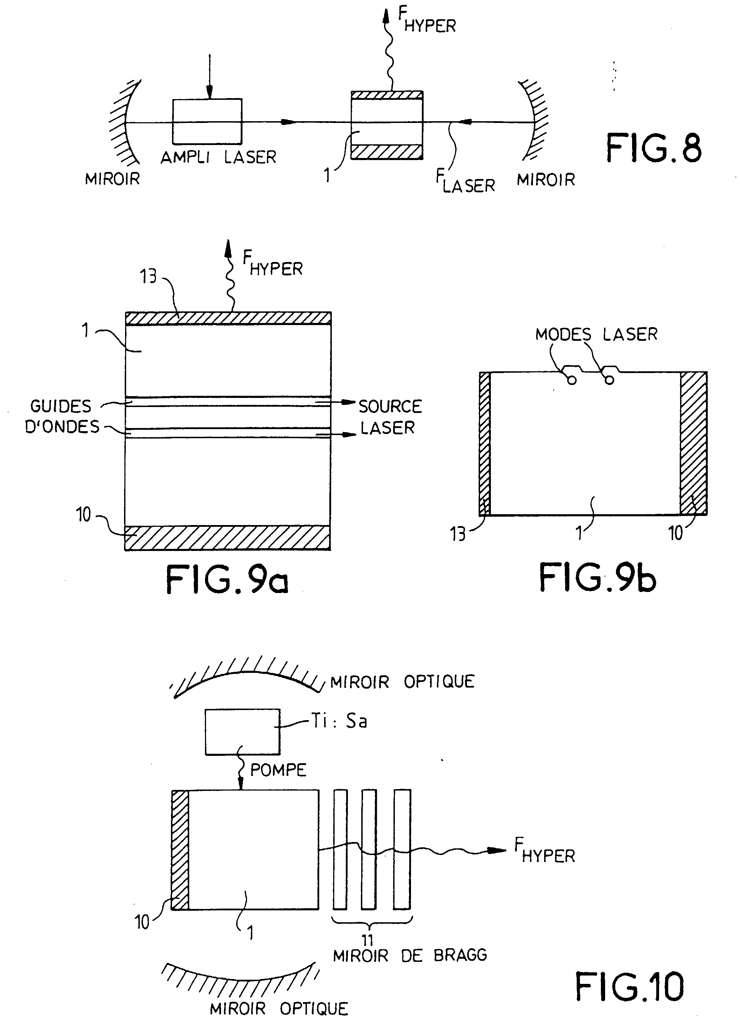

La cavité supraconductrice contenant le matériau non linéaire peut être également intégré dans la cavité même du laser de pompe. L'efficacité du processus est encore améliorée. On obtient un dispositif schématisé sur la figure 8.

Un dispositif selon l'invention peut être réalisé de la façon suivante :

Des couches de supraconducteur de haute température critique (YBaCuO) sont déposées sur des substrats de LaAlO₃. Il a été démontré que de telles couches permettaient d'atteindre des finesses supérieures à 10⁶ à 10 GHz (voir l'article « Low phase noise oscillator for stealth target detection » J.C. Mage, B. Marcilhac, P. Hartemann, J.P. Castera, International conference on radars, Paris, Mai 1994, p 202). Le milieu non linéaire est un substrat de LiNbO₃ d'épaisseur 4.7 mm calculée de façon à ce que la cavité obtenue, en posant les substrats sur le cristal de LiNbO₃, soit résonnante à 10 GHz. Le faisceau de pompe est un laser picoseconde à colorants, pompé par un YAG doublé à 532 nanomètres. La durée des pulses de la pompe est d'environ 10 picosecondes, ce qui est assez court pour obtenir un spectre large, présentant des fréquences différentes de plus de 10 GHz. L'onde hyperfréquence obtenue est collectée du côtés où le miroir supraconducteur est le moins réfléchissant, c'est-à-dire dans cet exemple du côté où est ménagé le petit trou de 20 microns de diamètres, par lequel est introduit la pompe. Il est nécessaire de plonger la cavité dans l'azote liquide, afin de bénéficier des propriétés supraconductrices des miroirs.

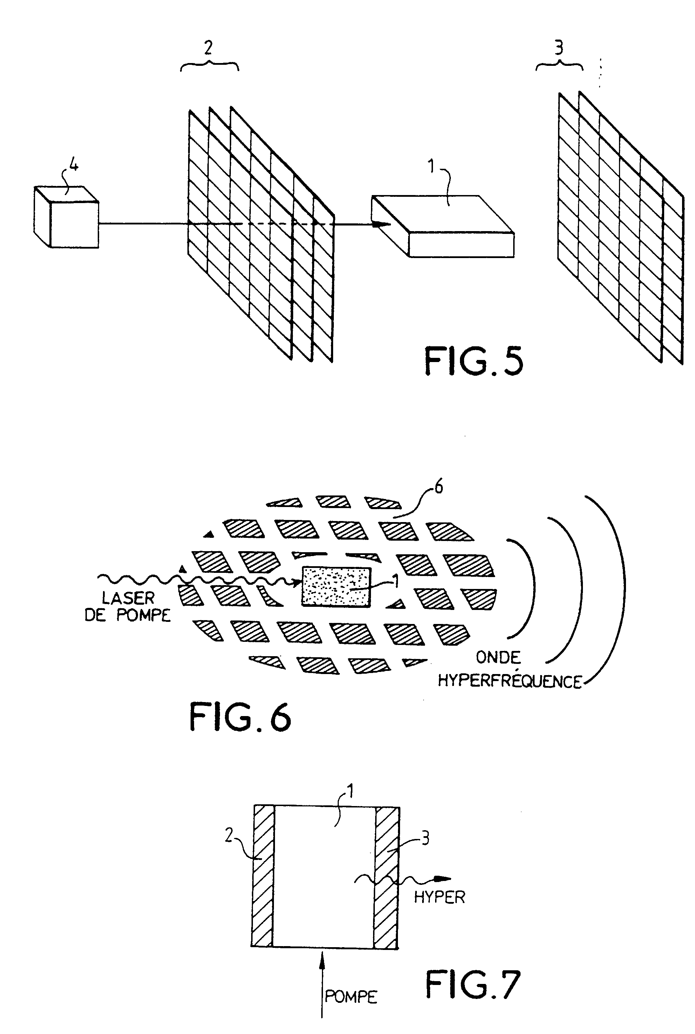

Selon une variante de réalisation, la cavité est réalisée à l'aide de treillis en matériau conducteur (métal par exemple). La figure 5 représente de façon schématique ces treillis. Les mailles des treillis sont telles que le faisceau de pompe peut le traverser. La dimension d'une maille est par exemple de l'ordre du millimètre ou inférieur au millimètre. Par contre, ce maillage est tel que le treillis est réfléchissant aux hyperfréquences. L'un des treillis est semi-réfléchissant. A titre d'exemple, le miroir 2 est réalisé à l'aide de trois treillis superposés et le treillis 3 à l'aide de deux treillis.

Selon une autre variante de réalisation, les miroirs de la cavité sont réalisés en matériau à bande interdite photonique appelé aussi à « gap de photons ». On trouvera des exemples de telles cavités dans le brevet français n° 2 734 097.

La figure 6 représente un tel dispositif. Le maillage des trous du matériau à gap de photons est tel que le faisceau de pompe puisse le traverser pour atteindre le milieu non linéaire 1. Sur cette figure, on a prévu que le matériau à gap de photons entoure le matériau non linéaire. Cependant, il pourrait également n'être prévu qu'à deux extrémités du milieu non linéaire.

Selon une variante de réalisation, dans un milieu non linéaire, tel que GaAS selon la symétrie du tenseur χ⁽²⁾ pompé selon une direction, on peut émettre une onde selon une direction perpendiculaire à la direction de l'onde de pompe. Cela est décrit dans le document de Vakhshoori et al. « Surface-Emitting Second-Harmonic Generator for Waveguide Study », Applied Physics Letters, 52, 422 (1988). La figure 7 représente une telle variante dans laquelle le milieu optique non linéaire 1 est compris entre deux miroirs 2 et 3 réalisant une cavité hyperfréquence et dans laquelle le faisceau pompe pénètre dans la cavité parallèlement aux miroirs. Comme décrit précédemment, le faisceau comporte plusieurs fréquences et la différence de ces fréquences génère une onde hyperfréquence émise perpendiculairement aux miroirs de la cavité.

Selon une variante de réalisation, la différence de fréquence est réalisée à l'intérieur de la cavité du laser de pompe lui-même. Celui-ci est un laser à semiconducteurs pulsé. La fabrication du laser à semiconducteurs est connue de l'homme de l'art, c'est un laser à puits quantiques réalisé par épitaxie par jets moléculaires sur un substrat en GaAs. Comme ce matériau est non linéaire, il est lui-même le siège du processus de différence de fréquence. On utilise cette fois une cavité métallique obtenue en déposant des couches minces de métal de part et d'autre du matériau. D'un côté du laser, la couche métallique 10 est plus épaisse de manière à être un réflecteur parfait, l'onde hyperfréquence étant générée par l'autre face, comme cela est indiqué sur la figure 9a. La distance entre les couches métalliques 10 et 13 (longueur de la cavité hyperfréquence) est choisie de manière à ce que l'onde hyperfréquence soit en phase avec la fréquence des pulses du laser de pompe. Si l'on néglige la dispersion, cela signifie que les deux cavités (de pompe dans l'infrarouge et hyperfréquence) ont des longueurs égales, le dispositif est donc carré. En pratique, la longueur de la cavité hyperfréquence est choisie légèrement plus petite que la longueur de la cavité infrarouge, en raison de la dispersion. Pour une émission désirée aux alentours de f = 94 GHz, on obtient un laser côté du carré égal à c/f/n = 0.9 mm, c étant la vitesse de la lumière et n l'indice de réfraction de GaAs. Comme cela est représenté sur la figure 9a et sur la vue en coupe de la figure 9b, deux guides sont réalisés dans le matériau 1. De façon générale, plusieurs rubans formant chacun un laser de pompe sont réalisés parallèlement par une technique classique de technologie des lasers à semiconducteurs, afin d'accroître la puissance de pompe totale.

La variante de réalisation de la figure 10 comporte un laser Saphir dopé Titane, un laser Ti:Sa à modes bloqués, pompé par un laser Argon. A l'intérieur de la cavité du Ti:Sa est placé le cristal non linéaire 1 recouvert d'une couche métallique 10 d'un côté qui fait office de réflecteur parfait hyperfréquence, et de l'autre muni d'un miroir de Bragg 11, fait d'une alternance de couches ou de lames d'Alumine et d'air, d'épaisseur égale à un quart de la longueur d'onde hyperfréquence générée. L'ensemble fonctionne à température ambiante, puisqu'il n'est pas fait usage de supraconducteurs dans cet exemple. La distance entre le miroir de Bragg et le cristal non linéaire peut être changée à volonté, offrant ainsi la possibilité d'accorder la cavité avec le taux de répétition du laser de pompe.

Une application intéressante de l'invention réside dans les propriétés de la lumière issue de la source optique, après qu'elle ait traversé la cavité hyperfréquence. En effet, il a été démontré que la conversion de fréquence en cavité est un moyen de comprimer le bruit en intensité des sources de pompe. L'invention permet donc d'obtenir une source de lumière comprimée : il s'agit de la source optique de pompe, qui devient comprimée (c'est-à-dire avec un bruit d'intensité plus faible) lors de son passage dans la cavité hyperfréquence. Le faisceau optique sortant par le miroir 3 est donc comprimé (ou stabilisé).

## Revendications

1. Générateur d'ondes hyperfréquences caractérisé en ce qu'il comporte un milieu en matériau optique non linéaire (1) compris dans une cavité optique (2, 3) et une source optique (4) émettant dans le milieu non linéaire un faisceau de pompe comportant plusieurs fréquences de façon à présenter une gamme de fréquences large permettant d'obtenir par différences de fréquences une onde hyperfréquence ; et en ce que la cavité optique est accordée à ladite longueur d'onde hyperfréquence, l'un des miroirs de la cavité étant semi-réfléchissant ou quasi-réfléchissant à la longueur d'onde hyperfréquence.

2. Générateur d'ondes hyperfréquences selon la revendication 1, caractérisé en ce que la source optique émet des impulsions de durée courte.

3. Générateur selon la revendication 2, caractérisé en ce que la source optique émet des impulsions dont la durée est de l'ordre de quelques dizaines de picosecondes ou inférieure.

4. Générateur d'ondes hyperfréquences selon la revendication 1, caractérisé en ce que la source optique est multimode.

5. Générateur selon la revendication 1, caractérisé en ce que la cavité optique est réalisée à l'aide de deux miroirs en matériaux métalliques, diélectriques ou supraconducteurs, l'un des miroirs possédant un trou permettant à l'impulsion de pompe de pénétrer dans la cavité.

6. Générateur selon la revendication 1, caractérisé en ce que les miroirs sont accolés au milieu non linéaire, l'épaisseur du milieu non linéaire étant calculée pour que la distance entre les deux miroirs soit accordée à la longueur d'onde hyperfréquence.

7. Générateur selon la revendication 1, caractérisé en ce que les miroirs de la cavité sont en matériau supraconducteur.

8. Générateur selon la revendication 1, caractérisé en ce que les miroirs de la cavité sont réalisés avec des treillis métalliques dont la dimension des mailles permet le passage des impulsions de pompe mais permet la réflexion des ondes hyperfréquences.

9. Générateur selon la revendication 1, caractérisé en ce que les miroirs sont réalisés à l'aide de matériaux à gap de photons permettant le passage des impulsions de pompe mais réfléchissant les ondes hyperfréquences.

10. Générateur selon la revendication 6, caractérisé en ce que les miroirs sont réalisés à l'aide de substrats portant sur une face une couche de matériau supraconducteur.

11. Générateur selon la revendication 10, caractérisé en ce que chaque substrat est en LaAlO₃.

12. Générateur selon l'une des revendications 1 à 4 et 6 à 11, caractérisé en ce que le faisceau de pompe pénètre dans la cavité perpendiculairement à l'axe de la cavité hyperfréquence.

13. Générateur selon la revendication 1, caractérisé en ce que le milieu non linéaire est compris dans la cavité de la source optique.

14. Générateur selon l'une des revendications 1 ou 13, caractérisé en ce qu'il comporte une cavité hyperfréquence perpendiculaire à la cavité optique.

15. Générateur selon la revendication 14, caractérisé en ce que la cavité optique est réalisée par deux miroirs métalliques dont l'un est plus épais que l'autre.

16. Générateur selon la revendication 14, caractérisé en ce que la cavité optique est réalisée par un miroir métallique et un miroir de Bragg comprenant des lames en matériau diélectrique faible perte distantes les unes des autres.

17. Générateur selon la revendication 1, caractérisé en ce que le milieu en matériau non linéaire est un matériau laser, deux premières faces dudit milieu réalisant la cavité optique et deux deuxièmes faces perpendiculaires aux premières étant munis de moyens de réflexion des fréquences hyperfréquences.

18. Générateur selon la revendication 17, caractérisé en ce que le milieu en matériau non linéaire comporte plusieurs guides d'ondes optiques parallèles.

19. Source optique comprimée, caractérisée en ce qu'elle comporte un générateur selon l'une des revendications précédentes.
